Europäisches Patentamt

European Patent Office

Office européen des brevets

(19)

(11) Publication number: **0 437 078 A1**

## EUROPEAN PATENT APPLICATION

(12)

(21) Application number: **90314044.0**

(22) Date of filing: **20.12.90**

(51) Int. Cl.⁵: **C09D 11/02**

(30) Priority: **11.01.90 US 463686**

(43) Date of publication of application:
**17.07.91 Bulletin 91/29**

(84) Designated Contracting States:
**DE FR GB**

(71) Applicant: **International Business Machines
Corporation
Old Orchard Road
Armonk, N.Y. 10504(US)**

(72) Inventor: **Chang, Loto Shen-Lun
6194 Calle Esperanza
San Jose, CA 95120(US)**
Inventor: **Gendler, Paul Lewis
6323 Contessa Court
San Jose, CA 95123(US)**

(74) Representative: **Atchley, Martin John
Waldegrave
IBM United Kingdom Limited Intellectual
Property Department Hursley Park
Winchester Hampshire SO21 2JN(GB)**

(54) **Ink for thermal ink jet printers.**

(57) The present invention relates to an ink for use on a thermal ink jet printer comprising a solvent and a dye which is soluble in the solvent.

According to the invention the ink is characterised in that the solvent is at least half water by weight and in that the ink includes an ammonium salt in an amount which is no more than 0.2% by weight of the ink.

EP 0 437 078 A1

# INK FOR THERMAL INK JET PRINTERS

The present invention is concerned with the composition of inks for use in thermal ink jet printers. Inks which are characterized by their resistance to failure caused by kogation or by etching of the heater surface are particularly useful in printers of this type.

Japanese Published Unexamined Patent Application 54-123303 shows an ink for an ink jet printer with a solvent which is 75 g of ethylene glycol and 21 g of water. It has added to it 1.5 g of sodium nitrite and 1.3 g of ammonium chloride.

Japanese Published Unexamined Patent Application 57-098576 shows an ink for a continuous ink jet printer in which the solvent is at least 70% by vol. ethyl alcohol, and no more than 30% by vol. water. An ionizable salt, e.g. sodium benzoate and/or ammonium chloride is added in the amount of 0.2-3 wt. %.

Japanese Published Unexamined Patent Application 58-187473 shows an ink for a bubble jet printer which contains only two solvents and water plus a dye. Other inks shown in the document are said to contain ammonium salts (not specifically halides or sulfonates) to achieve proper conductivity.

Thermal ink jet printer printheads utilize fast pulse heating of thin-film heaters locally to form a vapour bubble in ink located on the heater surface. Efficient performance of the printhead requires that the heater excitation last for several microseconds and that the heater temperature be raised to well over 300°C, in pulses at repetition frequencies of several kilohertz. Thus, during operation, the ink jet heaters are subjected to severe chemical and thermal influences that may be detrimental to the performance and lifetime of the devices. Etching of the overcoat materials, often aggravated by the formation of ink-decomposition products (i.e., kogation) on top of the heater surface, is the major culprit leading to heater failures.

An extensive kogation/etching (K/E) study has revealed that certain chemicals are responsible for varying amounts of kogation or etching of thermal ink jet heaters. This kogation/etching directly correlates with lifetime: the formation of large amounts of kogation lead to a 'soft' or partial failure due to a loss in drop velocity and therefore misplaced drops, while large amounts of etching lead to a 'hard' or total failure due to heater destruction.

The object of the present invention is to provide an improved ink for use in a thermal ink jet printer.

The present invention relates to an ink for use on a thermal ink jet printer comprising a solvent and a dye which is soluble in the solvent.

According to the invention the ink is characterised in that the solvent is at least half water by weight and in that the ink includes an ammonium salt in an amount which is no more than 0.2% by weight of the ink.

A particular advantage of an ink in accordance with the above composition is that it makes possible the use of a wide variety of dyes as colouring matter for the inks. Because of the prevention of kogation and etching, many dyes which previously could not be used in thermal jet inks can now be used.

The amount of ammonium halide or ammonium sulfonate in the ink is a critical feature of the ink composition. In general, it is harmful to use more than 0.2% by weight of the ammonium salt in the ink composition. About 0.1% by weight is most often the optimum amount, but even amounts as low as 1 part per million have shown beneficial results. The expression ammonium halide is used to include ammonium chloride and ammonium bromide. The most preferred compound is ammonium chloride. Useful sulfonates include, for example, ammonium hydroxybenzenesulfonate, ammonium methane sulfonate and ammonium 2-bromoethanesulfonate.

Solutions were evaluated for kogation and/or etching as follows. A thermal ink jet printer head was cleaned and rinsed with deionized water, and then filled with the solution to be tested. The head was mounted on a stand so that the individual jets could be monitored by video-microphotography. The videotape was used to check that the jets were operative during the test periods. The output fluid from the jets for each test was recirculated so that the procedure could avoid large reservoirs of ink. However, in some cases fresh fluid was used throughout the test. Usually, two or three heaters were operated for each specified time period to provide some statistics, and several heaters were usually not tested so that an average unused heater height could be obtained. The usual operating periods were 1, 2, and 4 hours.

After the test was run, the head was evaluated first by an optical microscope and then by a profilometer scan. The optical inspection gave a qualitative estimate of kogation, and an experienced operator could get a qualitative estimate of etching, while the profilometer gave a quantitative average for both kogation and etching. All etch rates and kogation heights are given in Angstrom units.

## Examples of compositions evaluated

1.a. Aqueous inks are characterized by the incorporation of water-solubilizing functional groups into molecules otherwise not water soluble. One common water-solubilizing group is a salt of a carboxylic acid; benzoic acid was chosen to be examined as the representative for this functional group. Solutions of sodium benzoate were prepared in 50% (w/w) ethylene glycol (EG) and water at various concentrations up to 5%. Each solution was evaluated according to the general procedure for its kogation and/or etching. In the case of sodium benzoate, only etching was observed, and the etch rate was linear with both time and concentration. 1.b. The 0.5% sodium benzoate solution of Example 1 was modified by the addition of a small amount (0.1%) of ammonium chloride. The etch rate of this modified solution was substantially reduced as compared with the solution of Example 1a.

2.a. A 5% solution of a magenta dye was evaluated according to the general procedure, and this solution showed marked kogation.

2.b. Various amounts of ammonium chloride, from 1 ppm to 2,000 ppm, were added to the 5% solution of the magenta dye in Example 2a. The addition of ammonium chloride at as low as 1 ppm reduced the amount of kogation.

3. A 5% solution of an orange-yellow dye (Colour Index #13015) was evaluated according to the general procedure for its kogation and etching. A 1% solution showed severe kogation and an etch rate of 7-13. The addition of 0.5% ammonium chloride reduced the kogation to moderate and the etch rate to 0.34.

4. Ink jet inks sometimes require the addition of buffers and biocides; one of these common additives was tested at 0.4% according to the general procedure and it showed an etch rate of 21. The addition of 0.1% ammonium chloride reduced this etch rate to between 0.1 and 0.5.

## Claims

1. An ink for use on a thermal ink jet printer comprising a solvent and a dye which is soluble in said solvent,
   characterised in that said solvent is at least half water by weight and in that said ink includes an ammonium salt in an amount which is no more than 0.2% by weight of the ink.

2. An ink as claimed in Claim 1 wherein the amount of said ammonium salt is about 0.1% by weight of the ink.

3. An ink as claimed in Claim 1 or Claim 2 wherein said ammmonium salt is an ammonium halide.

4. An ink as claimed in Claim 3 wherein said ammonium halide is ammonium chloride.

5. An ink as claimed in Claim 1 or Claim 2 wherein said ammonium salt is an ammonium sulfonate.

6. An ink as claimed in any one of the preceding claims in which the remainder of said solvent is ethylene glycol.

European Patent
Office

**EUROPEAN SEARCH REPORT**

| DOCUMENTS CONSIDERED TO BE RELEVANT | | | EP 90314044.0 |
|---|---|---|---|
| Category | Citation of document with indication, where appropriate, of relevant passages | Relevant to claim | CLASSIFICATION OF THE APPLICATION (Int. Cl.5) |
| A | US - A - 4 853 037<br>(LOREN E. JOHNSON et al.)<br>* Abstract * | 1,6 | C 09 D 11/02 |
| A | US - A - 3 994 736<br>(CARL HELLMUTH HERTZ et al.)<br>* Abstract; column 3, lines 65-68; column 4, lines 1-4; column 4, lines 29-31 * | 1-4 | |
| A | US - A - 4 239 543<br>(J. DONALD BEASLEY)<br>* Abstract * | 1,6 | |
| A | US - A - 4 737 190<br>(MASARU SHIMADA et al.)<br>* Abstract * | 1 | |
| | | | TECHNICAL FIELDS SEARCHED (Int. Cl.5) |
| | | | C 09 D |

The present search report has been drawn up for all claims

| Place of search | Date of completion of the search | Examiner |
|---|---|---|
| VIENNA | 19-02-1991 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)